# EUROPÄISCHE PATENTANMELDUNG

(11) **EP 1 700 834 A2**
(43) Veröffentlichungstag der Anmeldung: **13.09.2006**
(21) Anmeldenummer: 06110852.8
(22) Anmeldetag: 08.03.2006
(51) Int. Cl.: C04B 28/06, C04B 24/28, C04B 111/10

(54) **Verfahren zur Herstellung und Verwendung von selbsttrocknenden wässrigen Reaktionsharzmörteln**

(30) Priorität: 10.03.2005 DE 102005011015
(71) Anmelder: ARDEX GMBH, 58453 Witten (DE)
(72) Erfinder: Oberste-Padtberg, Rüdiger, 42111 Wuppertal (DE); Offerhaus, Rolf, 58453 Witten (DE); Sieksmeier, Jörg, 45133 Essen (DE)
(74) Vertreter: Cohausz & Florack

(57) **Zusammenfassung**

Eine Zusammensetzung für einen selbsttrocknenden Kunstharzmörtel enthält einem Epoxidharz, einem geeigneten Härter und einen Pulverbestandteil, wobei der Pulverbestandteil ein reaktiver Pulverbestandteil ist, der unter Wasserzugabe die Bildung eines wasserreichen Calciumaluminosulfathydrats zulässt und der (a) einen Aluminatträger und (b) einen Calciumsulfatträger enthält, wobei das Calciumaluminosulfathydrat in einem Anteil von mindestens 30 Gew.%, bezogen auf die Masse der Gesamthydrationsprodukte enthalten ist.

## Beschreibung

Die Erfindung betrifft einen selbsttrocknenden Epoxidharzmörtel und dessen Verwendung als Fugenmaterial, Boden-, Wand- oder Deckenspachtel, Estrich, Verlegematerial für Boden-, Wand- oder Deckenbekleidungen.

Die EP 0 727 398 B2 offenbart einen Epoxidharz und gebrannten Ölschiefer enthaltenden Kompositzement. Da die Aluminiumionen in diesem Kompositzement zu einem großen Teil silikatisch gebunden sind, ist nur ein geringer Anteil des Gesamthydrationsprodukts dieses Zements Ettringit.

Epoxidharz enthaltende Baustoffe sind grundsätzlich bekannt. So beschreibt die US 3 798 191 Epoxidharz und Puzzolan enthaltende Zementzusammensetzungen. Diese Zementmischung härtet hydraulisch über die Hydratation des Zements und die Vernetzungsreaktion des Epoxidharzes aus. Bei einem dickschichtigen Auftrag eines solchen Systems wird aber im inneren des Mörtelkörpers eine lange Zeit eine Restmenge an Wasser bleiben, welches die Vernetzungsreaktion verhindert und, bei langsamem Austreten durch Verdunstung, zu einem Schwinden des aushärtenden Produkts führt.

Aus Boden und Belag 3/2000 S. 34-37 (2000) ist ein wasseremulgierbares Reaktionsharzprodukt bekannt, das durch Zugabe von Füllstoffen während der Trocknung und Vernetzung ein offenporiges Gefüge ausbildet, welches die Verdunstung des gebundenen Restwassers ermöglicht.

Bislang ist folglich die Verwendung von wässrigen Epoxidharzbeschichtungen und -mörteln in Auftragsstärken von mehr als 2 bis 5 mm nur begrenzt möglich, da die hierin enthaltene Wassermenge praktisch ausschließlich durch Verdunstung ausgetrieben wird. Die bei dickschichtiger Applikation verbleibenden Wassermengen wirken sich überaus störend auf die Vernetzungsreaktion des Reaktionsharzsystems aus. Verwendbar sind solche wässrigen Systeme bisher also ausschließlich in dünnschichtig applizierbaren Beschichtungs- oder Anstrichsystemen. In solchen dünnschichtigen Systemen erhärtet das jeweilige Beschichtungsmittel durch Verdunstung des darin enthaltenen Wassers und durch anschließende Vernetzung.

Andererseits haben mit Wasser verdünnbare Reaktionsharzbeschichtungsmaterialien die Vorteile, dass keine organischen Lösungsmittel verwendet werden müssen, der Feuchtigkeitsgehalt des zu beschichtenden Untergrunds höher sein kann als bei wasserfreien Systemen und das Reinigen von Verarbeitungsgeräten mit Wasser erfolgen kann.

Der Erfindung liegt daher die Aufgabe zugrunde, einen sogenannten selbsttrocknenden, vernetzenden, mit Wasser mischbaren Epoxidharzmörtel bereitzustellen, der in beliebigen Schichtdicken aufgetragen werden kann, homogen trocknet und vernetzt. Darüber hinaus ist es erwünscht, die Abbinde- und Erhärtungszeit zu steuern.

Gelöst wird diese Aufgabe durch eine Zusammensetzung für einen selbsttrocknenden Mörtel mit einem mit Wasser mischbaren Epoxidharz, einem Härter für das Epoxidharz und einem Pulverbestandteil, wobei der Pulverbestandteil ein reaktiver Pulverbestandteil ist, der unter Wasserzugabe die Bildung eines wasserreichen Calciumaluminosulfathydrats zulässt und der (a) einen Aluminatträger und (b) einen Calciumsulfatträger enthält, wobei die Hydrationsprodukte mindestens 30 Gew.% Calciumaluminosulfathydrat enthalten. Der Mörtel ist frei von gebranntem Ölschiefer.

Gemäß einer alternativen Ausführungsform der Erfindung enthält der reaktive Pulverbestandteil zusätzlich (c) einen Calciumoxidträger.

Die Menge der Pulverbestandteile (a), (b) und gegebenenfalls (c) ist derart gewählt, dass die Bildung eines wasserreichen Calciumaluminosulfathydrats nach Wasserzugabe erfolgt.

Der erfindungsgemäß eingesetzte reaktive Pulverbestandteil der Zusammensetzung weist ein hohes Wasserbindungsvermögen auf. Es bildet sich ein wasserreiches Calciumaluminosulfathydrat als Haupthydratationsprodukt. Unter wasserreich wird verstanden, dass die gebildete mineralische Phase einen Kristallwasseranteil vom mehr als 10 mol/Formeleinheit aufweist. Haupthydratationsprodukt bedeutet, dass dieses in einem Anteil von mindestens 30 Gew.%, vorzugsweise mehr als 40 Gew.% und besonders bevorzugt 50 bis 90 Gew.%, bezogen auf das Gesamthydratationsprodukt, vorliegt. Gesamthydratationsprodukt bezeichnet den Zustand des erhärteten Gemischs 28 Tage nach Wasserzugabe und Vermischen mit Wasser und gegebenenfalls weiteren Bestandteilen.

Selbsttrocknend im Sinne der Erfindung bedeutet mithin ein hohes Wasserbindungsvermögen. Ein selbsttrocknendes Mörtelsystem im Sinne der Erfindung bedeutet insbesondere, daß mehr als 60 Gew.%, vorzugsweise 70 bis 80 Gew.% des zugesetzten Wassers in das Hydratationsprodukt eingebaut werden. Dieses hohe Wasserbindungsvermögen der mineralischen Phase erlaubt die Applikation der Zusammensetzung in beliebigen Schichten. Dennoch erfolgt eine weitgehend homogene Trocknung und Vernetzung und somit letztendlich ein schneller Festigkeitsaufbau des formulierten Mörtels.

Ein erfindungsgemäß geeigneter reaktiver Pulverbestandteil ermöglicht die Bildung eines Calciumaluminosulfathydrats. Neben den Calciumaluminosulfathydraten können beispielsweise Calciumsilikathydrate und Calciumsulfathydrate vorliegen. Ein besonders geeignetes Calciumaluminosulfathydrat ist beispielsweise das Mineral Ettringit, 3 CaO·Al₂O₃·3CaSO₄·32H₂O. Ettringit kann auch als Hauptreaktionsprodukt neben weiteren Calciumaluminosulfathydraten vorliegen.

Ein reaktiver Pulverbestandteil, der unter Wasserzugabe Calciumaluminosulfathydrat, insbesondere Ettringit, bildet, ist ein solcher, der einen Aluminatträger wie Aluminiumhydroxid oder Calciumaluminat, einen Calciumsulfatträger und gegebenenfalls einen Calciumoxidträger enthält.

Geeignete Calciumaluminatträger sind beispielsweise handelsübliche Tonerdezemente. Geeignete Calciumsulfatträger sind die als Anhydrit, Halbhydrat oder Dihydrat vorliegenden Calciumsulfate. Calciumsulfoaluminatzement kann vorzugsweise als Calciumaluminat- und Calciumsulfatträger dienen. Sulfoaluminatzement ist ein geeigneter Sulfat- und Aluminatträger. Geeignete Calciumoxidträger sind beispielsweise Portlandzement, Brandkalk oder Kalkhydrat.

Der reaktive Pulverbestandteil der erfindungsgemäßen Zusammensetzung ist mithin ein anorganisches Bindemittel. Dieses Bindemittel kann 10 bis 50, vorzugsweise 20 bis 35 Gew. % eines Calciumsulfatträgers, 20 bis 80, vorzugsweise 65 bis 70 Gew. % eines Calciumaluminatträgers, beispielsweise handelsüblichen Tonerdezements und 0 bis 60, vorzugsweise 3 bis 20, besonders bevorzugt 3 bis 10 Gew. % Portlandzement, Brandkalk und/oder Calciumhydroxid enthalten, jeweils bezogen auf die Masse des reaktiven Pulverbestandteils.

Der reaktive Pulverbestandteil kann weitere handelsübliche Additive enthalten. Übliche Additive sind beispielsweise Abbindebeschleuniger oder -verzögerer. Im Zusammenhang mit der vorliegenden Erfindung werden Ammoniumcarbonat und Alkalicarbonate, insbesondere Lithiumcarbonat und Natriumcarbonat, besonders bevorzugt. Diese Additive können in Mengen bis zu 3 Gew. %, bezogen auf die Masse des reaktiven Pulverbestandteils, eingesetzt werden. Insbesondere können die vorgeschlagenen Alkalicarbonate, Lithiumcarbonat, Natriumcarbonat oder deren Gemische in Mengen bis zu 3,0, vorzugsweise 0,1 bis 0,2 Gew. %, bezogen auf die Masse des reaktiven Pulverbestandteils, eingesetzt werden. Diese Additive dienen der Steuerung des Abbindens und der Erhärtung des reaktiven Pulverbestandteils und des Gesamtsystems.

Als Abbindeverzögerer können Citronensäure, Weinsäure, Glukonsäure, deren Alkalimetall-, Erdalkalimetall- und Ammoniumsalze, Alkalimetall- und Erdalkalimetallphosphate und Phosphonate eingesetzt werden. Diese Stoffe sind bekannt, sie werden in den bekannten Konzentrationen eingesetzt.

Geeignete Füllstoffe sind beispielsweise quarzitische und carbonatische Stoffe und Bariumsulfat.

Die erfindungsgemäße Zusammensetzung für einen selbsttrocknenden Kunstharzmörtel enthält ferner ein mit Wasser mischbares Epoxid, das mit einem geeigneten Härter vernetzt und damit gehärtet wird. Grundsätzlich sind alle Epoxidharze geeignet, die für den Baustoffsektor oder andere Anwendungen auf dem Markt erhältlich sind. Typischerweise handelt es sich dabei um bei Raumtemperatur (beispielsweise 15 bis 25 °C) härtbare Harze , in denen vicinale Epoxy-Gruppen als Polymerisationspunkte dienen. Solche Harze sind üblicherweise durch Copolymerisation eines Monomers erhältlich, das eine Epoxygruppe oder eine in eine Expoxygruppe umwandelbare Gruppe enthält, mit einem Monomer, das sich durch das Vorhandensein von Hydroxylgruppen auszeichnet, beispielsweise ein Di- oder Polyhydroxyphenol oder ein Di- oder Polyhydroxyalkohol. Beispielhaft für das eine Epoxygruppe liefernde Monomer ist Epichlorhydrin. Beispielhaft für Monomere, die Hydroxylgruppen aufweisen, sind einkernige Di- und Trihydroxyphenole einschließlich Resorcin, Hydrochinon, Pyrocatechol, Saligenin und Phloroglucinol, ferner geeignet ist der dreiwertige Alkohol Glycerol und schließlich mehrkernige Hydroxyaromaten und Polyhydroxyphenole einschließlich Bisphenol A, Bisphenol F, Trihydroxyldiphenyldimethylmethan, 4,4'-Dihydroxybiphenyl, die langkettigen Bisphenole sowie Gemische der vorgenannten Verbindungen.

Besonders bevorzugte Epoxidharze für die Zwecke der vorliegenden Erfindung sind Kondensationsprodukte aus Epichlorhydrin und Bisphenol A oder Bisphenol F, Gemischen aus Bisphenolen, insbesondere Bisphenolen A und F, oder Glycerol.

Die erfindungsgemäß eingesetzten Epoxidharze sind im Handel erhältlich. Dasselbe gilt für Härter zur Vernetzung der Epoxidharze. Entweder ist das Epoxidharz und/oder der Härter mit Wasser mischbar. Grundsätzlich als Härter geeignet sind aliphatische, aromatische, primäre, sekundäre oder tertiäre Amine. Dies sind insbesondere Ethylendiamin, Diethylentriamin, Triethylentetramin, Tetraethylen, Pentamin, Diethylamino-propylamin, Metaphenylendiamin, Piperin, Diaminodiphenylsulfon, Menthandiamin und Polyamidharze, die mit Epoxidharzen vernetzt werden können.

Die erfindungsgemäße Zusammensetzung enthält 10 bis 60 Gew.% eines Epoxidharz/Härter-Gemischs, bezogen auf die Masse des Gemischs aus Epoxidharz/Härter und reaktivem Pulverbestandteil. Vorzugsweise beträgt der Anteil des Epoxidharz/Härter-Gemischs 20 bis 50 Gew.%.

Die erfindungsgemäße Zusammensetzung kann auf verschiedenen Wegen hergestellt werden. Beispielsweise kann derart verfahren werden, dass man zunächst den reaktiven Pulverbestandteil mit einem wasserfreien Härter vermischt und anschließend die Zubereitung des Reaktivharzes oder Epoxidharzes untermischt. Es ist auch möglich, dass man den reaktiven Pulverbestandteil mit dem wasserfreien Harz vermischt und anschließend Wasser und den Härter zumischt.

Das folgende Beispiel dient der weiteren Erläuterung der Erfindung.

### Beispiel

Ein wässriges Reaktionsharzgemisch besteht aus 50 Gewichtsteilen einer Festharzdispersion (Beckopox® EP384w) (50% Festkörper), wobei 4,9 Gew.% auf einen Härter (Beckopox® VEH 2662) entfallen. Die Festigkeitsentwicklung dieser Festharzdispersion I wurde bestimmt.

Mit dem Reaktionsharzgemisch I wurden 69,5 Gewichtsteile eines feinkörnigen Calciumcarbonatfüllstoffs (spezifische Oberfläche nach Blaine 6.400 cm²/g) vermischt. Von diesem Gemisch II wurde die Festigkeitsentwicklung gemessen.

Anstelle des Calciumcarbonatfüllstoffs II wurde dem Reaktionsharzgemisch I ein nach Wasserzugabe Ettringit bildendes Reaktionspulver zugesetzt. Dieses bestand aus 22 Gewichtsteilen eines handelsüblichen Calciumsulfathalbhydrats, 69 Gewichtsteilen Tonerdezement, 9 Gewichtsteilen Portlandzement, 0,6 Gewichtsteilen Alkalicarbonat und 0,4 Gewichtsteilen eines handelsüblichen Zementverzögerers. Der so erhaltene Mörtel III bildet bereits nach 24 Stunden, bedingt durch die kristalline Wassereinbindung, eine Oberflächenfestigkeit von > 30 N/mm² aus. Die Festigkeitsentwicklung ist in der Tabelle gezeigt.

Enthält der Mörtel III keinen Härter (Gemisch IV), stellt sich nach 24 Stunden nur eine Oberflächenfestigkeit von < 10 N/mm² ein.

Bestimmt wurde von den Zusammensetzungen I bis IV jeweils die Kugeldruckhärte nach Brinell. Diese Bestimmung erfolgt entsprechend der DIN EN ISO 65006-1.

Die folgende Tabelle 1 zeigt die Zusammensetzungen der zu prüfenden Probekörper in Gewichtsteilen.

**Tabelle 1**

| | I | II | III | IV |
|---|---|---|---|---|
| Festharz-dispersion | 50 | 50 | 50 | 50 |
| CaCO₃-Mehl | 0 | 69,5 | 0 | 0 |
| Reaktiv-pulver | 0 | 0 | 69,5 | 69,5 |
| Epoxidhärter | aliquoter Anteil, bezogen auf Ep-Äquiva-älent | aliquoter Anteil, bezogen auf Ep-Äquivalent | aliquoter Anteil, bezogen auf Ep-Äquivalent | 0 |

In der Tabelle 2 ist die Entwicklung der Festigkeitswerte der Gemische I, II, III und IV gezeigt. Angegebenen sind die Werte für die Kugeldruckhärte nach Brinell in N/mm².

**Tabelle 2**

| Zeit in h | I | II | III | IV |
|---|---|---|---|---|
| 2 | 0 | 0 | 0 | 0 |
| 3 | 0 | 0 | 6,1 | 4,5 |
| 4 | 0 | 0 | 9,8 | 5,5 |
| 5 | 0 | 0 | 11,6 | 6,4 |
| 6 | 0 | 0 | 15,3 | 6,4 |
| 18 | 0 | 0 | 30,5 | 7,5 |
| 24 | 0 | 0 | 31,8 | 8 |

Trotz des hohen durch die Epoxidharzzubereitung eingebrachten Wasseranteils erfolgt im Falle der Zusammensetzung III eine ausgezeichnete Festigkeitsentwicklung durch die Aufnahme des Wassers in das gebildete Calciumaluminosulfathydrat. Diese Festigkeit wird nicht erzielt, wenn das Epoxidharz wegen des fehlenden Härters nicht vernetzen und aushärten kann.

## Patentansprüche

1. Zusammensetzung für einen von gebranntem Ölschiefer freien selbstrocknenden Kunstharzmörtel mit einem Epoxidharz, einem geeigneten Härter und einen Pulverbestandteil, **dadurch gekennzeichnet, dass** der Pulverbestandteil ein reaktiver Pulverbestandteil ist, der unter Wasserzugabe die Bildung eines wasserreichen Calciumaluminosulfathydrats zulässt und der (a) einen Aluminatträger und (b) einen Calciumsulfatträger enthält, wobei das Calciumaluminosulfathydrat in einem Anteil von mindestens 30 Gew.%, bezogen auf die Masse der Gesamthydrationsprodukte enthalten ist.

2. Zusammensetzung nach Anspruch 1, **dadurch gekennzeichnet, dass** ein Calciumoxidträger (c) in dem reaktiven Pulverbestandteil enthalten ist.

3. Zusammensetzung nach Anspruch 1 oder 2, **dadurch gekennzeichnet, dass** der Aluminatträger Aluminiumhydroxid und/oder Calciumaluminat ist.

4. Zusammensetzung nach Anspruch 2, **dadurch gekennzeichnet, dass** der Calciumoxidträger ausgewählt ist aus Portlandzement, Calciumoxid, Calciumhydroxid oder deren Gemischen.

5. Zusammensetzung nach einem der Ansprüche 1 bis 4, **dadurch gekennzeichnet, dass** der reaktive Pulverbestandteil 20 bis 35 Gew. % eines Calciumsulfats oder Calciumsulfathydrats, 65 bis 70 Gew. % eines Tonerdezements, 3 bis 20 Gew. % eines Calciumoxidträgers, jeweils bezogen auf die Masse des reaktiven Pulverbestandteils enthält.

6. Zusammensetzung nach einem der Ansprüche 1 bis 5, **dadurch gekennzeichnet, dass** das nach der Hydratation das gebildete Calciumaluminosulfathydrat hauptsächlich als Ettringit vorliegt.

7. Zusammensetzung nach einem der vorhergehenden Ansprüche, **dadurch gekennzeichnet, dass** 0,05 bis 3 Gew.%, bezogen auf die Masse des reaktiven Pulverbestandteils, mindestens eines Alkalimetallcarbonats enthalten sind.

8. Zusammensetzung nach einem der Ansprüche 1 bis 7, **dadurch gekennzeichnet, dass** das Epoxidharz in einem Anteil von 20 bis 50 Gew.%, bezogen auf die Masse des Gemischs aus Harz, Härter und reaktivem Pulverbestandteil, enthalten ist.

9. Verwendung einer Zusammensetzung nach einem der Ansprüche 1 bis 8 als Fugenmaterial, Boden-, Wand- oder Deckenspachtel, Estrich, Verlegematerial für Boden-, Wand- oder Deckenbekleidungen.

10. Verfahren zur Herstellung eines Kunstharzmörtels nach einem der Ansprüche 1 bis 8, **dadurch gekennzeichnet, dass** man zunächst einen reaktiven Pulverbestandteil mit einem wasserfreien Härter vermischt und anschließend eine wässrige Zubereitung des Epoxidharzes untermischt.

11. Verfahren zur Herstellung eines Kunstharzmörtels nach einem der Ansprüche 1 bis 8, **dadurch gekennzeichnet, dass** man den reaktiven Pulverbestandteil mit einem wasserfreien Epoxidharz vermischt und anschließend Wasser und Härter zumischt.
